# EUROPEAN PATENT SPECIFICATION

(11) **EP 1 271 903 B1**
(45) Date of publication and mention of the grant of the patent: **01.09.2004**
(21) Application number: 01114667.7
(22) Date of filing: 19.06.2001
(51) Int. Cl.: H04M 1/725

(54) **Mobile phone monitor and remote control system**
Mobiltelefonüberwachungssystem und Fernbedienungssystem für das Telefon
Système de surveillance de téléphone mobile et de commande à distance

(43) Date of publication of application: 02.01.2003
(73) Proprietor: Inventec Appliances Corp., Wugu Shiang, Taipei (TW)
(72) Inventor: Lai, Cheng-Shing, Taipei (TW); Hu, Shi-Wei, Nanjing (CN)
(74) Representative: TER MEER STEINMEISTER & PARTNER GbR

(56) References cited:
- WO-A-00/31982
- WO-A-00/65803
- US-A- 5 880 732
- US-B1- 6 223 029

## Description

### FIELD OF THE INVENTION

This invention relates to a mobile phone monitor and remote control system, and particularly a mobile phone monitor and remote control system that allows users to obtain the mobile phone operation status while the mobile phone is not with them, thus operating the mobile phone in a remote control fashion.

### BACKGROUND OF THE INVENTION

With the rapid development of the mobile phone industry and intense promotion of communication service providers, the mobile phone has achieved great popularity nowadays. Modern mobile phones not only provide the function of transmitting voice or message, as network connections for offering multimedia functions has become an essential function for the new generation of mobile phones. In addition, user-friendliness is an issue many users are keenly concerned about, and this has become a high priority goal that the mobile phone manufacturers are pursuing. For instance, most mobile phones have a headset which enables users to take incoming calls without holding the handset. The headset generally includes an earpiece linking to a microphone or a built-in speaker for users to have conversations without holding the mobile phone.

Although mobile phones have the headset design and function, when put into practice, there are still some problems. For instance, most mobile phone users place the mobile phone in:
1. handbags;
2. pockets; and
3. hanging on the waistband.

When there is an incoming call , users usually take the call in one of the following ways:
A. opening the handbag or pocket to fetch the mobile phone, or fetching the mobile phone from the waistband;
B. check the incoming phone number to screen undesirable calls;
C. choose to take or pass the call.

The action A set forth above has some problems and drawbacks, notably:
1. while fetching the mobile phone, the articles held in the handbag or pocket might be taken out and dropped inadvertently;
2. the mobile phone could be dropped incidentally and get damaged;
3. unfolding the clothes to retrieve the mobile phone from the waistband looks awkward and unsightly;
4. fetching the mobile phone frequently for taking incoming calls on important occasions is embarrassing; and
5. ringing will consume battery power of the mobile phone and shorten the standby time of the phone.

While the action A may be avoided by using the headset, the action B of viewing the display screen to screen the incoming call has to be done by taking out the mobile phone.

The US 5,880,732 describes an arrangement having a mobile phone and a display monitor, whereas the mobile phone is communicating with the display monitor to display for example the number of an incoming call or SMS messages. The display monitor comprises a receiver, a transmitter and a LCD. To facilitate the readability for older people in recognizing small letters and numbers on the display of the mobile phone the display monitor is provided, which receives the caller ID and other text messages from the mobile phone via a wireless communication link. A wireless transmission module for transmitting the status of the mobile phone and messages in wireless fashion is arranged. Incoming calls or SMS received by the display monitor are confirmed by sending a confirmation messages to the mobile phone, no control of the mobile phone from the display monitor is possible.

The WO 0031982 describes a device for remotely controlling a computer by radio, thereby access is provided for computer users to their desktop computers without taking away any devices from the computer. A remote device communicates via RF with the computer by sending audio, video and control or status information to the remote device. The performance of the remote device is designed for providing a high quality controlling. The remote device comprises a display device 24, a control interface (keyboard, joystick, mouse) and a kind of transceiver unit for transmitting or receiving messages to and from the remote device, whereas received messages will be displayed on the display. Thus the computer could be remotely controlled via the remote device by transmitting commands issued by the control interfaces. For handling the display and control a microprocessor for processing the incoming information is included in the remote device. Any information displayed on the computer monitor will be transmitted to the remote device without taking care on certain events, which takes place.

The WO 0065803 discloses a mobile phone, which is connected via a communication link with a control unit. In general the mobile phone will be connected via a cable based connection, but also a connection based on Bluetooth or IR is possible. The control unit comprises a display and a control interface for inputting commands. Messages transmitted by the mobile phone will be displayed on the LCD of the control unit. Further operational commands inputted via the keys will be transmitted to the mobile phone to remotely control the mobile phone. All information displayed on the mobile phone will be transmitted to the control unit, so no monitoring of the status is provided, thus no preset processes will start, when a certain event takes place.

### SUMMARY OF THE INVENTION

The primary object of the invention is to provide a mobile phone monitor and remote control system that enables users to know the number of the incoming call without taking out the mobile phone, and to remotely control the mobile phone.

Another object of the invention is to resolve the inconvenient problem of taking incoming calls that occurs with conventional mobile phones, and to provide a monitor and remote control system that enables users to decide to take or pass the incoming call.

The mobile phone monitor and remote control system according to the invention includes an independent remote controller separate from the mobile phone and a wireless transmission module (such as a bluetooth module or a general wireless radio frequency module) installed in the mobile phone. The remote control provides the function of displaying the phone number and remotely controlling whether to take or pass the call. The wireless transmission module transmits the operation status and related messages of the mobile phone to the remote control. Hence, when there is an incoming call, the user may utilize the remote control to display the incoming phone number to get the caller's identity, then decide whether to take or pass the incoming call, thereby removing the inconvenience of frequently fetching the mobile phone .

In another preferred embodiment of the invention, the remote control may be designed with ornamental features for matching with users' clothing, as well as offering practical functions.

The foregoing and additional objects, features and advantages of the invention will be more readily apparent from the following detailed description, which proceeds with reference to the accompanying drawings.

### BRIEF DESCRIPTION OF THE DRAWINGS

FIG. 1 is a system block diagram of a first embodiment of the invention.
FIG. 2 is a process flow of the invention, showing operation processes when the mobile phone receives an incoming call.
FIG. 3 is a process flow of the invention, showing the remote control operation process.
FIG. 4 is a pictorial view of the remote control with an ornament design.

### DESCRIPTION OF THE PREFERRED EMBODIMENTS

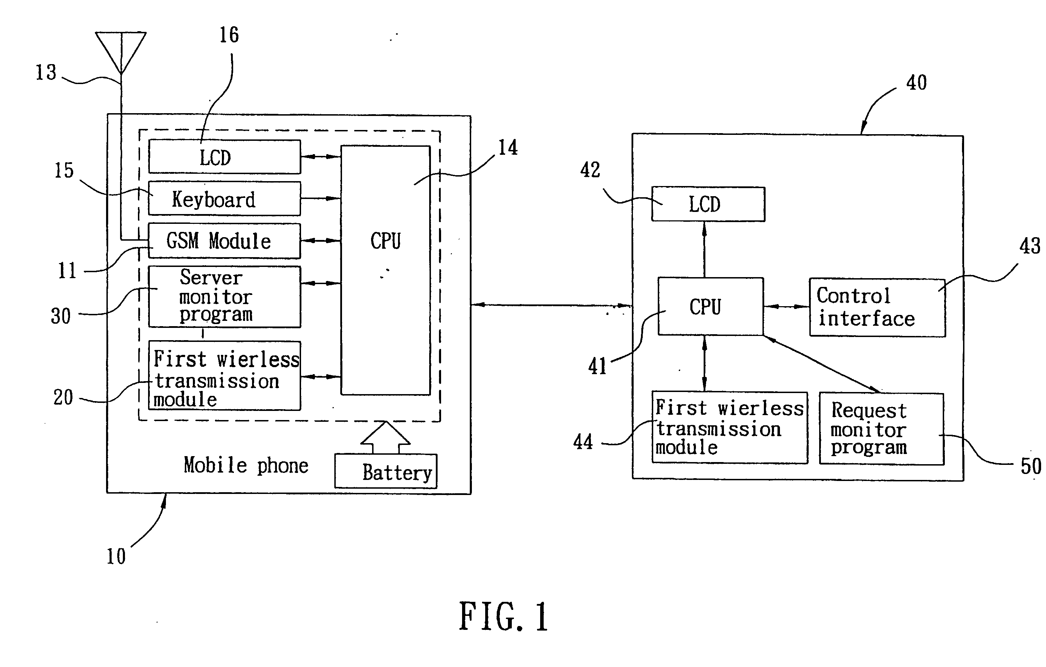

Referring to FIG. 1 for a first embodiment of the system of the invention, a typical mobile phone 10 is provided, which includes all the commonly used features such as a GSM communication module 11, battery 12, antenna 13, CPU 14, keypad 15, and display screen 16. In addition, the following elements for achieving the objects of this invention are also included:
a first wireless transmission module 20 located in the mobile phone 10 for emitting the operation status of the mobile phone 10 and related messages , and receiving operation commands;
a server monitor program 30 installed in the mobile phone 10 for monitoring the mobile phone operation status and controlling the CPU 14 of the mobile phone 10 to proceed with the required processes according to the received operation commands transmitted from the first wireless transmission module 20 ;
a remote control 40 including a microprocessor 41, a display screen 42, a control interface 43 and a second wireless transmission module 44. The second wireless transmission module 44 is for receiving the message transmitted from the first wireless transmission module 20, decoding the message, and forwarding it to the microprocessor 41 for processing; and
a request monitor program 50 installed in the remote control 40 for processing the received messages in the second wireless transmission module 44, and sending coded operation commands from the control interface 43 to the remote control 40 for transmitting to the first wireless transmission module 20 of the mobile phone 10.

The first wireless transmission module 20 and second wireless transmission module 44 may use the bluetooth technique or a general wireless radio frequency module. Through the server monitor program 30 and request monitor program 50, a client/server-like structure and relationship is established, thereby controlling message transmission between the first wireless transmission module 20 and the second wireless transmission module 44.

The main function of the server monitor program 30 and first wireless transmission module 20 is to control the mobile phone 10 in order to perform the desired operation when the preset events are taking place. The preset events include sending the related messages (particularly the incoming phone number) to the remote control 40 when the mobile phone 10 receives an incoming call, notifying the user when a call is incoming, displaying the identity of the caller by the incoming phone number on the display screen 42 of the remote control 40, and executing the conversation function, disconnecting, or performing other desired processes upon receiving the user's commands through the remote control 40 or direct operation of the mobile phone 10. Of course, the server monitor program 30 may further convert the caller's phone number to the caller's name by searching through the stored electronic telephone directory built in the mobile phone 10, and displaying the name on the display screen of the remote control 40. Users thus can have full knowledge of the caller's identity before deciding whether to use the control interface 43 of the remote control 40 to command the mobile phone 10 to take the incoming call.

Of course, there are other preferable embodiments, such as one in which the server monitor program 30 executes an alert operation according to a preset process, and through the remote control 40 alerts the user by displaying an alert message or by ringing a bell.

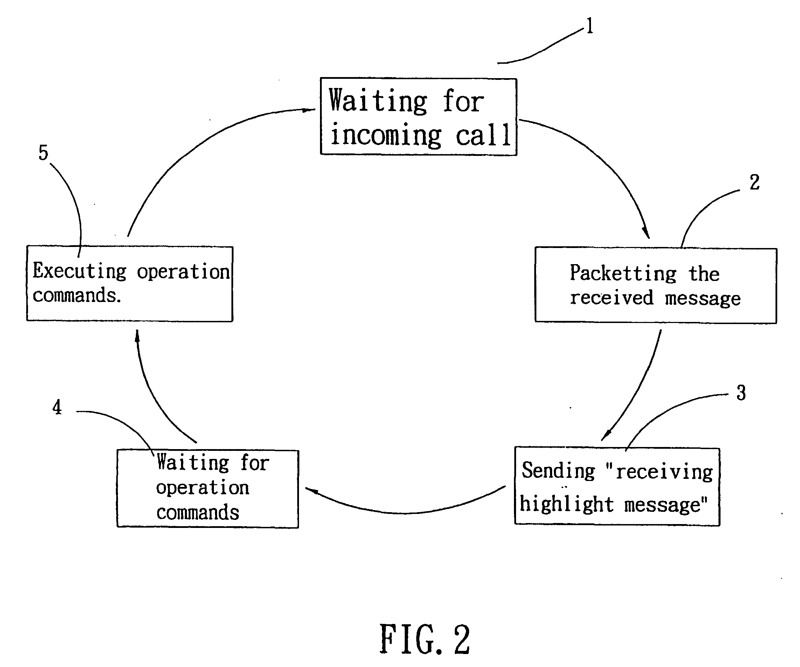

Monitoring the conversation status of the mobile phone 10 through the server monitor program 30 and first wireless transmission module 20, processing the incoming call and other main functions are illustrated in FIG. 2. The process includes:
1. waiting for an incoming call while the mobile phone 10 is in an ordinary standby state for monitoring and receiving phone calls;
2. packetting the received message: the mobile phone 10 receives incoming phone call messages, captures the phone number or caller's identity data, and forms a "receiving highlight message" packet;
3. sending the "receiving highlight message" to the second wireless transmission module 44;
4. waiting for operation commands: this is a standby state, and the mobile phone 10 is ready to receive commands from the remote control 40 or keypad 15 of the mobile phone 10 to take the incoming call, disconnect, or perform other desired processes ; and
5. executing operation commands after receiving the commands from the remote control 40 or directly from the mobile phone 10, such as taking the call, disconecting , or transferring the call , and then returning to the first step of "waiting for the incoming call". If the mobile phone 10 is linked to a headset (such as an earpiece and microphone), the user may take the incoming call directly without fetching the mobile phone. This may further improve convenience.

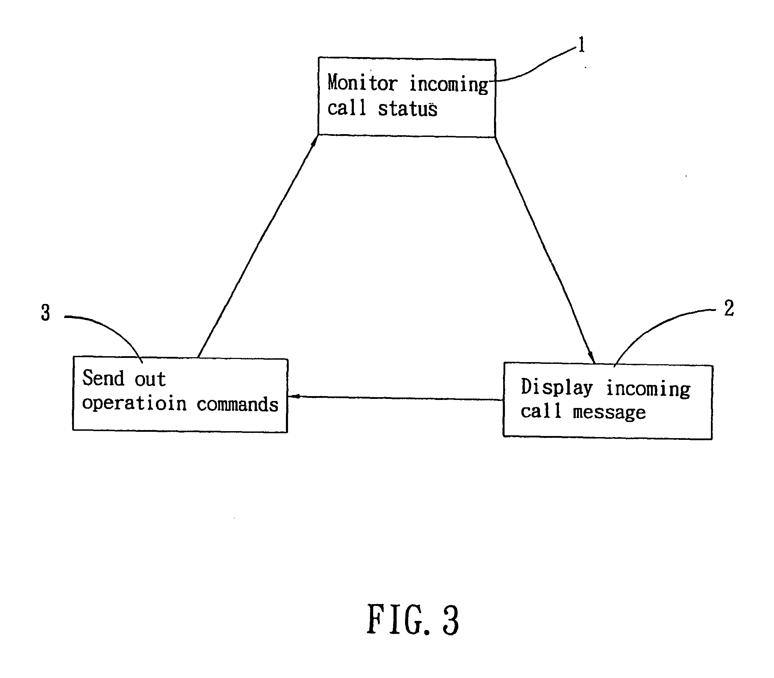

FIG. 3 illustrates the major functions and operation contents of the request monitor program 50 and remote controller 40, which includes:
1. monitoring the incoming call status of the mobile phone 10;
2. displaying the incoming call message: when there is an incoming call, the second wireless transmission module 44 will receive the "receiving highlight message" sent out from the first wireless transmission module 20 of the mobile phone 10, and the caller's phone number or identity information contained in the packet will be displayed on the display screen 42 of the remote control 40; and
3. sending out operation commands: when the user decides to take the incoming call or disconnect through the control interface 43 of the remote controller 40, by pressing the take call button 430 or the cutoff button 431, the second wireless transmission module 44 transmits to the mobile phone 10 and finally returns to the first stage of "monitoring the incoming call status of the mobile phone 10".

In the preferred embodiments, the remote control 40 may be designed to have an ornamental appearance, so that it may serve as an ornament for hanging on the user's clothing or personal articles (such as a backpack or handbag ) thereby offering a decoration effect in addition to its practical function.

By means of the remote control 40 described above, and through the display screen 42 on the remote control 40, users may see the displayed information without fetching the mobile phone 10, and decide whether to take or disconnect the incoming call by using the remote control 40.

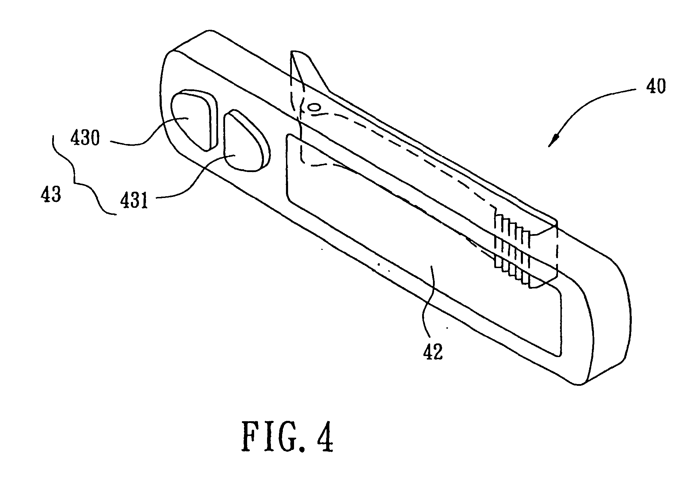

FIG. 4 illustrates the remote control 40 with an ornamental exterior design for hanging on the user's clothing or personal articles (such as a backpack or handbag ) to double as a decorative article in addition to its practical function.

While the preferred embodiments of the invention have been set forth for purposes of disclosure, modifications of the disclosed embodiments of the invention as well as other embodiments thereof may occur to those skilled in the art. Accordingly, the appended claims are intended to cover all embodiments that do not depart from the spirit and scope of the invention.

## Claims

1. A mobile phone monitor and remote control system for monitoring mobile phone operation status and performing remote control operation without taking the mobile phone (10) , comprising:
- a first wireless transmission module (20) installed in the mobile phone (10) for emitting the mobile phone operation status and related messages in a wireless fashion and receiving messages from outside;
- a server monitor program (30) installed in the mobile phone (10) for monitoring the mobile phone operation status and controlling the mobile phone (10) to proceed a corresponding process when a preset event taking place:
- a remote controller (40) including a display screen (42) and a second wireless transmission module (44) adapted to receive messages from the first wireless transmission module (20) and to display the message on the display screen (42) and to transmit messages to the first wireless transmission module (20); and
- a request monitor program (50) installed in the remote controller (40) for processing the messages received by the second wireless transmission module (44)
**characterized in that**
- said first wireless transmission module (20) installed in the mobile phone (10) is for receiving operation commands from said remote controller (40);
- said remote controller (40) includes a control interface (43) having control buttons (430. 431), wherein said second wireless transmission module (44) is adapted to transmit operation commands issued by the control interface (43) for remotely controlling the mobile phone (10);
- said second wireless transmission module (44) is adapted to decode the message and to forward it to a microprocessor (41) fo processing;
- said request monitor program (50) is adapted to send coded operation commands from the control interface (43) of the remote control (40) for transmitting to the first wireless transmission module (20) of the mobile phone (10).

2. The mobile phone monitor and remote control system of claim 1, wherein the server monitor program (30) is adapted to transmit incoming phone number to the second wireless transmission module (44) through the first wireless transmission module (20) when the mobile phone (10) receives the incoming call and displaying the phone number on the display screen (42) of the remote controller (40).

3. The mobile phone monitor and remote control system of claim 1, wherein the server monitor program (30) is adapted to transmit caller identity data to the second wireless transmission module (44) through the first wireless transmission module (20) when the mobile phone (10) receives an incoming phone and displays the identity data on the display screen (42) of the remote controller (40).

4. The mobile phone monitor and remote control system of claim 1, wherein the first wireless transmission module (20) and second wireless transmission module (44) are Bluetooth modules which employ Bluetooth technology.

5. The mobile phone monitor and remote control system of claim 1, wherein the first wireless transmission module (20) and second wireless transmission module (44) are wireless radio frequency modules.

6. The mobile phone monitor and remote control system of claim 1, wherein the control interface (43) of the remote controller (40) includes a taking-call button (430) for taking phone call and a cutoff-call button (431) for passing phone call.

7. The mobile phone monitor and remote control system of claim 1, wherein the remote controller (40) has an ornamental exterior shape for serving as an ornament to hang on an user's body.

8. The mobile phone monitor and remote control system of claim 1 further having a headset linked to the mobile phone (10), the headset including an earpiece and a microphone.

## Patentansprüche

1. Mobiltelephonüberwachungs- und -fernsteuerungssystem zum Überwachen des Mobiltelephon-Betriebszustands und zum Ausführen eines Fernsteuerungsbetriebs ohne Zurhandnahme des Mobiltelephons (10), mit:
- einem ersten Modul (20) für drahtlose Übertragung, das in dem Mobiltelephon (10) installiert ist, um den Mobiltelephonbetriebszustand und damit in Beziehung stehende Nachrichten in drahtloser Weise zu senden und Nachrichten von außerhalb zu empfangen;
- einem Server-Überwachungsprogramm (30), das in dem Mobiltelephon (10) installiert ist, um den Mobiltelephon-Betriebszustand zu überwachen und um das Mobiltelephon (10) zu steuern, um einen entsprechenden Prozess auszuführen, wenn ein im Voraus festgelegtes Ereignis stattfindet;
- einer Fernsteuerungseinheit (40), die einen Anzeigebildschirm (42) und ein zweites Modul (44) für drahtlose Übertragung umfasst, wobei das Modul so beschaffen ist, dass es Nachrichten von dem ersten Modul (20) für drahtlose Übertragung empfängt und die Nachricht auf dem Anzeigebildschirm (42) anzeigt und Nachrichten an das erste Modul (20) für drahtlose Übertragung überträgt; und
- einem Anforderungsüberwachungsprogramm (50), das in der Fernsteuerungseinheit (40) installiert ist, um die von dem zweiten Modul (44) für drahtlose Übertragung empfangenen Nachrichten zu verarbeiten,
**dadurch gekennzeichnet, dass**
- das erste Modul (20) für drahtlose Übertragung, das in dem Mobiltelephon (10) installiert ist, dem Empfang von Betriebsbefehlen von der Fernsteuerungseinheit (40) dient;
- die Fernsteuerungseinheit (40) eine Steuerschnittstelle (43) aufweist, die Steuerknöpfe (430, 431) besitzt, wobei das zweite Modul (44) für drahtlose Übertragung so beschaffen ist, dass es Betriebsbefehle überträgt, die von der Steuerschnittstelle (43) ausgegeben werden, um das Mobiltelephon (10) fernzusteuern;
- das zweite Modul (44) für drahtlose Übertragung so beschaffen ist, dass es die Nachricht decodiert und sie an einen Mikroprozessor (41) weiterleitet, um sie zu verarbeiten;
- das Anforderungsüberwachungsprogramm (50) so beschaffen ist, dass es codierte Betriebsbefehle von der Steuerschnittstelle (43) der Fernsteuerungseinheit (40) schickt, um sie an das erste Modul (20) für drahtlose Übertragung des Mobiltelephons (10) zu übertragen.

2. Mobiltelephonüberwachungs- und -fernsteuerungssystem nach Anspruch 1, bei dem das Server-Überwachungsprogramm (30) so beschaffen ist, dass es eine ankommende Telephonnummer über das erste Modul (20) für drahtlose Übertragung an das zweite Modul (44) für drahtlose Übertragung überträgt, wenn das Mobiltelephon (10) den ankommenden Anruf empfängt, und die Telephonnummer auf dem Anzeigebildschirm (42) der Fernsteuerungseinheit (40) anzeigt.

3. Mobiltelephonüberwachungs- und -fernsteuerungssystem nach Anspruch 1, bei dem das Server-Überwachungsprogramm (30) so beschaffen ist, dass es Anrufer-Kenndaten über das erste Modul (20) für drahtlose Übertragung an das zweite Modul (44) für drahtlose Übertragung überträgt, wenn das Mobiltelephon (10) einen ankommenden Anruf empfängt, und die Kenndaten auf dem Anzeigebildschirm (42) der Fernsteuerungseinheit (40) anzeigt.

4. Mobiltelephonüberwachungs- und -fernsteuerungssystem nach Anspruch 1, bei dem das erste Modul (20) für drahtlose Übertragung und das zweite Modul (44) für drahtlose Übertragung Bluetooth-Module sind, die die Bluetooth-Technologie verwenden.

5. Mobiltelephonüberwachungs- und -fernsteuerungssystem nach Anspruch 1, bei dem das erste Modul (20) für drahtlose Übertragung und das zweite Modul (44) für drahtlose Übertragung drahtlose Hochfrequenzmodule sind.

6. Mobiltelephonüberwachungs- und -fernsteuerungssystem nach Anspruch 1, bei dem die Steuerschnittstelle (43) der Fernsteuerungseinheit (40) einen Anrufannahmeknopf (430) zum Annehmen eines Telephonanrufs und einen Anrufunterbrechungsknopf (431) zum Abweisen eines Telephonanrufs aufweist.

7. Bildtelephonüberwachungs- und -fernsteuerungssystem nach Anspruch 1, bei dem die Fernsteuerungseinheit (40) eine verzierte äußere Form besitzt, um als eine Verzierung zu dienen, die am Körper eines Benutzers hängt.

8. Mobiltelephonüberwachungs- und -fernsteuerungssystem nach Anspruch 1, das ferner einen Kopfsprechhörer, der mit dem Mobiltelephon (10) verbunden ist, besitzt, wobei der Kopfsprechhörer eine Hörmuschel und ein Mikrophon umfasst.

## Revendications

1. Système de surveillance de téléphone mobile et de commande à distance pour surveiller l'état de fonctionnement de téléphone mobile et effectuer un actionnement à distance sans prendre le téléphone mobile (10), le système comprenant :
- un premier module (20) de transmission sans fil installé dans un téléphone mobile (10) pour émettre l'état de fonctionnement du téléphone mobile et des messages associés de façon sans fil et pour recevoir des messages en provenance de l'extérieur ;
- un programme (30) de surveillance serveur installé dans le téléphone mobile (10) pour surveiller l'état de fonctionnement du téléphone mobile et commander le téléphone mobile (10) de mettre en marche un processus correspondant lorsque un événement préréglé se produit ;
- un contrôleur à distance (40) comprenant un écran d'affichage (42) et un second module (44) de transmission sans fil apte à recevoir des messages depuis le premier module (20) de transmission sans fil, à afficher le message sur l'écran d'affichage (42) et à transmettre des messages au premier module (20) de transmission sans fil ; et
- un programme (50) de surveillance de requête installé dans le contrôleur à distance (40) pour traiter les messages reçus par le second module (44) de transmission sans fil,
**caractérisé en ce que**
- ledit premier module (20) de transmission sans fil installé dans le téléphone mobile (10) est destiné à recevoir des commandes de fonctionnement depuis ledit contrôleur à distance (40) ;
- ledit contrôleur à distance (40) comprend une interface de commande (43) comportant des boutons de commande (430, 431), ledit second module (44) de transmission sans fil étant adapté pour transmettre des commandes de fonctionnement émises par l'interface de commande (43) pour une commande à distance du téléphone mobile (10) ;
- ledit second module (44) de transmission sans fil est apte à décoder le message et à le faire suivre vers un microprocesseur (41) pour traitement ;
- ledit programme (50) de surveillance de requête est apte à coder des commandes de fonctionnement depuis l'interface de commandé (43) du contrôleur à distance (40) pour une transmission vers le premier module (20) de transmission sans fil du téléphone mobile (10).

2. Système de surveillance de téléphone mobile et de commande à distance selon la revendication 1, dans lequel le programme (30) de surveillance serveur est apte à transmettre un numéro de téléphone entrant vers le second module (44) de transmission sans fil via le premier module (20) de transmission sans fil lorsque le téléphone mobile (10) reçoit un appel entrant, et à afficher le numéro de téléphone sur l'écran d'affichage (42) du contrôleur à distance (40).

3. Système de surveillance de téléphone mobile et de commande à distance selon la revendication 1, dans lequel le programme (30) de surveillance serveur est apte à transmettre des données de l'identité de l'appelant vers le second module (44) de transmission sans fil via le premier module (20) de transmission sans fil lorsque le téléphone mobile (10) reçoit un appel entrant, et à afficher le numéro de téléphone sur l'écran d'affichage (42) du contrôleur à distance (40).

4. Système de surveillance de téléphone mobile et de commande à distance selon la revendication 1, dans lequel le premier module (20) de transmission sans fil et le second module (44) de transmission sans fil sont des modules Bluetooth qui utilisent la technologie Bluetooth.

5. Système de surveillance de téléphone mobile et de commande à distance selon la revendication 1, dans lequel le premier module (20) de transmission sans fil et le second module (44) de transmission sans fil sont des modules sans fil de type radiofréquence.

6. Système de surveillance de téléphone mobile et de commande à distance selon la revendication 1, dans lequel l'interface de contrôle (43) du contrôleur à distance (40) comprend un bouton de prise d'appel (430) pour prendre un appel téléphonique et un bouton d'interruption (431) pour passer l'appel téléphonique.

7. Système de surveillance de téléphone mobile et de commande à distance selon la revendication 1, dans lequel le contrôleur à distance (40) présente une forme extérieure ornementale pour servir comme un ornement d'accrochage au corps de l'utilisateur.

8. Système de surveillance de téléphone mobile et de commande à distance selon la revendication 1, comprenant en outre un casque relié au téléphone mobile (10), le casque comprenant un écouteur et un microphone.
